**Europäisches Patentamt**

**European Patent Office**

**Office européen des brevets**

(11) Veröffentlichungsnummer : **0 094 021**
**B1**

(12) **EUROPÄISCHE PATENTSCHRIFT**

(45) Veröffentlichungstag der Patentschrift :
**11.12.85**

(21) Anmeldenummer : **83104374.0**

(22) Anmeldetag : **04.05.83**

(51) Int. Cl.⁴ : **B 65 G 45/00**

(54) **Abstreifvorrichtung zum Reinigen von Förderbändern, insbesondere Reversierbändern.**

(30) Priorität : **12.05.82 DE 3217740**

(43) Veröffentlichungstag der Anmeldung :
**16.11.83 Patentblatt 83/46**

(45) Bekanntmachung des Hinweises auf die Patenterteilung : **11.12.85 Patentblatt 85/50**

(84) Benannte Vertragsstaaten :
**FR GB IT SE**

(56) Entgegenhaltungen :
**BE-A- 572 499**
**DE-A- 2 709 714**
**GB-A- 2 023 079**
**US-A- 3 994 384**
**US-A- 4 098 394**

(73) Patentinhaber : **VSR Engineering GmbH Fördertechnik
Hingbergstrasse 319
D-4330 Mülheim/Ruhr (DE)**

(72) Erfinder : **Rappen, Albert, Dipl.-Ing.
Karlsruher Strasse 87
D-4330 Mülheim/Ruhr (DE)**

(74) Vertreter : **Honke, Manfred, Dr. et al
Patentanwälte Andrejewski, Honke & Partner Theaterplatz 3 Postfach 10 02 54
D-4300 Essen 1 (DE)**

## Beschreibung

Die Erfindung betrifft eine Abstreifvorrichtung zum Reinigen von Förderbändern, insbesondere Reversierbändern, die mit einer unterhalb des betreffenden Förderbandes angeordneten Lagerachse für darauf befestigte Torsions-Federarme mit endseitigen Schabeblättern, welche in schleppender Anstellung gegen das rücklaufende Untertrum angedrückt sind, versehen ist, wie dies schon aus der US-A-3 994 384 bekannt ist.

Es sind Abstreifvorrichtungen zum Reinigen von Förderbändern und insbesondere Reversierbändern bekannt, bei welchen die an den Enden der Torsions-Federarme starr befestigten Schabeblätter in stechender Anstellung gegen das Untertrum des betreffenden vorlaufenden Förderbandes angedrückt sind. Stechende Anstellung ist insbesondere deshalb problematisch, weil infolge unterschiedlicher Reib- und Abstreifkräfte durch Bandgeschwindigkeit, Oberflächenrauhigkeit oder Materialanklebung und -menge ein sogenannter stick-slip-Effekt auftritt, aus dem Rattermarken und schließlich Bandbeschädigungen resultieren. — Um diese Nachteile zu vermeiden und eine möglichst bandschonende Reinigungswirkung zu erzielen, wird daher bevorzugt eine schleppende Anstellung für die Schabeblätter verwirklicht. Bei Reversierbändern wird diese schleppende Anstellung jedoch zu einer stechenden Anstellung mit den erläuterten Nachteilen, wenn das betreffende Förderband in umgekehrter Richtung läuft, also zurückläuft. — Hier will die Erfindung Abhilfe schaffen.

Der Erfindung liegt die Aufgabe zugrunde, eine Abstreifvorrichtung zum Reinigen von Förderbändern, insbesondere Reversierbändern, der eingangs beschriebenen Art zu schaffen, die sich sowohl bei vorlaufendem als auch rücklaufendem Förderband durch optimale und bandschonende Reinigungswirkung auszeichnet.

Diese Aufgabe löst die Erfindung bei einer gattungsgemäßen Abstreifvorrichtung nach der US-A-3 994 384 dadurch, daß die Schabeblätter unter Zwischenschaltung von Torsions-Federgelenken mit zur Bandlaufrichtung querliegender Torsionsachse an den Enden der Torsions-Federarme gelagert sind und dadurch bei reversierendem Förderband aus ihrer schleppenden Vorlauf-Anstellung in umgekehrter Richtung in eine schleppende Rücklauf-Anstellung überkippen. — Nach Lehre der Erfindung bleibt also die schleppende Anstellung der Schabeblätter sowohl bei vorlaufendem als auch bei rücklaufendem Förderband erhalten, weil nicht nur die Torsions-Federarme unter Zwischenschaltung von Torsions-Federgelenken auf ihrer Lagerachse befestigt, sondern darüber hinaus zusätzlich die Schabeblätter unter Zwischenschaltung von Torsions-Federgelenken an den betreffenden Enden der Torsions-Federarme befestigt sind. Durch das gleichsam Überkippen bzw. Wegkippen der Schabeblätter wird auch bei zurücklaufendem Förderband der stick-slip-Effekt unterbunden, vielmehr werden die Andrückkräfte der Torsions-Federarme reduziert, weil die Torsions-Federarme aufgrund der weggekippten Schabeblätter nach oben ausweichen können. Das gilt insbesondere dann, wenn nach bevorzugter Ausführungsform der Erfindung der Torsionswinkel der Torsions-Federgelenke ca. 60° beträgt und davon der Torsionswinkelbereich für die Vorlauf-Anstellung bei 5° bis 10°, für die Rücklauf-Anstellung dagegen bei 50° bis 55° und bei neutraler Positionierung im Zuge der Anstellung bei 20° bis 25° liegt. Die Torsions-Federarme federn bei zurücklaufendem Förderband und übergekippten Schabeblättern bis auf Restandrückkräfte nach, wobei die verbleibende Reibwirkung jedoch in der Lage ist, die Schabeblätter bei wieder umkehrender Bandlaufrichtung aus der schleppenden Rücklauf-Anstellung über die neutrale Positionierung in die schleppende Vorlauf-Anstellung zurückzubewegen.

Weitere erfindungswesentliche Merkmale sind im folgenden aufgeführt. So sieht die Erfindung vor, daß der Torsionswinkel nicht aufgrund der Federkennlinie oder Konstruktion der Torsions-Federgelenke, sondern durch mechanische Anschläge in beide Kipprichtungen begrenzt ist. Vorzugsweise sind die Torsions-Federgelenke als Gummi- oder Stahlfederelemente ausgebildet. Außerdem können die Torsions-Federgelenke von einer Manschette aus Gummi oder biegeelastischem Kunststoff umgeben sein, um Verschmutzungen zu vermeiden.

Nach einem weiteren Vorschlag der Erfindung mit selbständiger Bedeutung ist vorgesehen, daß auf zumindest einem der beiden Enden der Lagerachse für die Torsions-Federarme ein Zahnrad befestigt ist und in das Zahnrad zumindest eine feder- oder gewichtsbelastete Sperrklinke eingreift. Bei Reversierbändern greifen vorzugsweise zwei Sperrklinken in jeweils entgegengesetzter Drehrichtung in das Zahnrad ein. Auf diese Weise wird die durch die Einstellung der Lagerachse für die Torsions-Federarme vorgegebene Anstellung der Schabeblätter stets in beiden Bandlaufrichtungen festgehalten.

Die durch die Erfindung erreichten Vorteile sind im wesentlichen darin zu sehen, daß eine Abstreifvorrichtung zum Reinigen von Förderbändern und insbesondere Reversierbändern verwirklicht wird, bei welcher schleppende bzw. schleifende statt stechende Anstellung der Schabeblätter sowohl bei vorlaufendem als auch rücklaufendem Förderband gewährleistet ist. Mit einem optimal schleifenden Anstellwinkel bzw. Torsionswinkel von 5° bis 10° zur Vertikalen streifen die Schabeblätter das Förderband bzw. dessen Untertrum sauber. Auch bei unterschiedlichen Reib- oder Abstreifkräften durch Bandgeschwindigkeit, Oberflächenrauhigkeit oder Materialanklebung und -menge bleibt dieser optimale Torsionswinkel stets erhalten. Das gleiche gilt für das reversierende Förderband, weil dann die Schabeblätter um ca. 60° überkippen und sich wiederum in schleifender bzw. schleppender Anstellung befinden, in der optimale und bandschonendste Reinigungswirkung erzielt wird. Geht man von der neutralen Positionierung aus, dann kippen die fiberelastisch gelagerten Schabeblätter um jeweils 30° in einerseits die Vorlaufstellung und andererseits die Rücklaufstellung selbständig um, so daß stets stick-slip-Effekt und daraus resultierende Rattermarken sowie schließlich Bandbeschädigungen vermieden werden.

Im folgenden wird die Erfindung anhand einer lediglich ein Ausführungsbeispiel darstellenden Zeichnung näher erläutert, es zeigen :

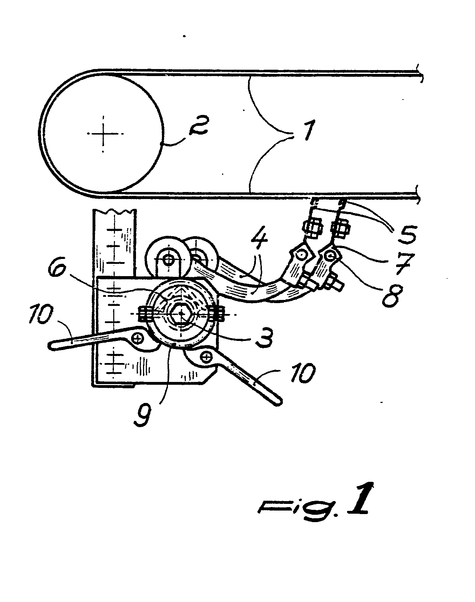

Figur 1 eine erfindungsgemäße Abstreifvorrichtung mit Umlenktrommel und Förderband in schematischer Seitenansicht,

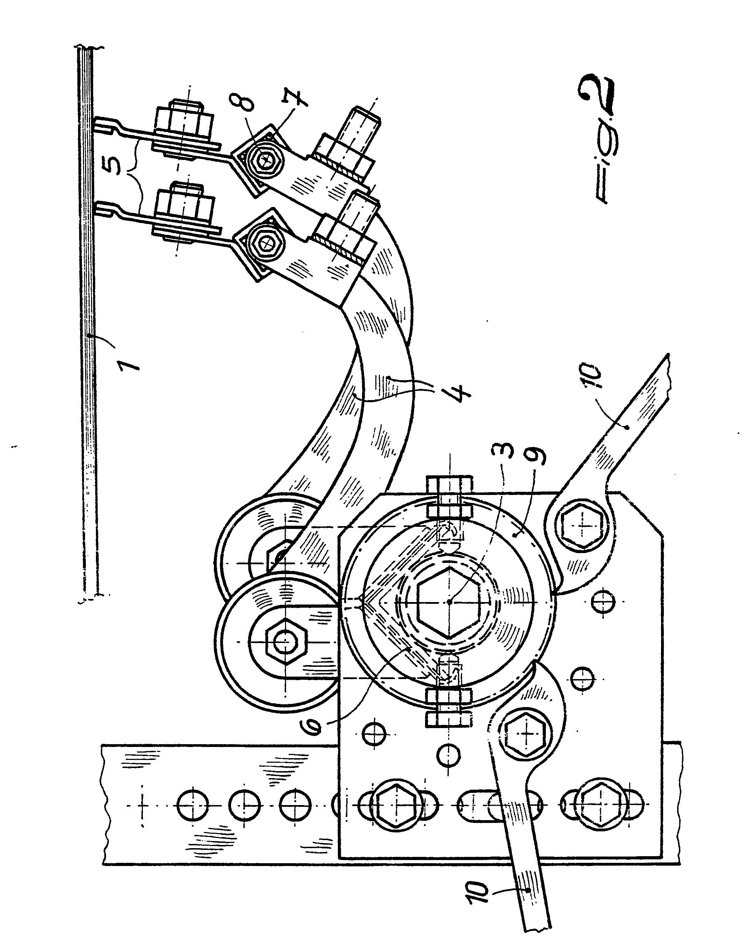

Figur 2 einen vergrößerten Ausschnitt aus dem Gegenstand nach Fig. 1, und

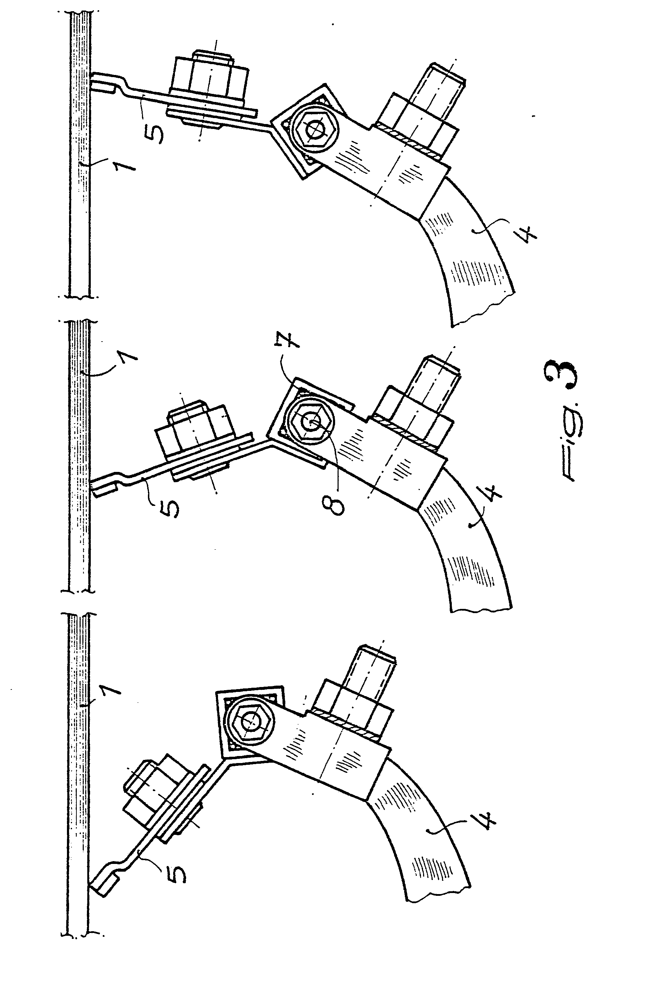

Figur 3 ausschnittsweise ein Schabeblatt in verschiedenen Funktionsstellungen.

In den Figuren ist eine Abstreifvorrichtung zum Reinigen von endlosen umlaufenden Förderbändern 1, insbesondere Reversierbändern, dargestellt, die im Bereich einer Umlenktrommel 2 angeordnet ist und zumindest eine unterhalb des betreffenden Förderbandes 1 angeordnete Lagerachse 3 für darauf befestigte Torsions-Federarme 4 mit endseitigen Schabeblättern 5 aufweist, welche in schleppender bzw. schleifender Anstellung gegen das rücklaufende Untertrum angedrückt sind. Die Bandbreite wird von mehreren sich überlappenden Schabeblättern 5 überstrichen. Die Schabeblätter 5 können aus verschiedenen Materialien bestehen, beispielsweise aus Kunststoff, Keramik, Stahl oder mit Hartmetall plattiert sein. Die Lagerachse 3 ist wie die regelmäßig mittels Schellen 6 auf der Lagerachse 3 befestigten Torsions-Federarme 4 justierbar. Durch Verdrehen und Arretieren der Lagerachse 3 wird auf die vorjustierten Torsions-Federarme 4 die gewünschte Vorspannung von 7,5 kp bis maximal 15 kp aufgebracht. — Die Schabeblätter 5 sind unter Zwischenschaltung von Torsions-Federgelenken 7 mit zur Bandlaufrichtung querliegender Torsionsachse bzw. Gelenkachse 8 an den Enden der Torsions-Federarme 4 gelagert. Dadurch kippen die Schabeblätter 5 bei reversierendem Förderband 1 aus ihrer schleppenden Vorlauf-Anstellung in umgekehrter Richtung in eine schleppende Rücklauf-Anstellung über. Der Torsionswinkel der Torsions-Federgelenke 7 beträgt ca. 60°. Der Torsionswinkelbereich für die Vorlauf-Anstellung liegt bei 5° bis 10°, für die Rücklauf-Anstellung bei 50° bis 55° und bei neutraler Positionierung bei 20° bis 25°, so daß die Schabeblätter 5 aus der neutralen Positionierung ± 30° in die eine und andere Bandlaufrichtung kippen. Der Torsionswinkel ist in beide Kipprichtungen durch mechanische nicht gezeigte Anschläge begrenzt. Die Torsions-Federgelenke 7 sind als Gummi- oder Stahlfederelemente ausgebildet. Sie können von einer ebenfalls nicht gezeigten Manschette aus Gummi oder biegeelastischem Kunststoff zur Vermeidung von Verschmutzungen umgeben sein.

Auf zumindest einem der beiden Enden der Lagerachse 3 für die Torsions-Federarme 4 ist ein Zahnrad 9 befestigt. In das Zahnrad 9 greift zumindest eine feder- oder gewichtsbelastete Sperrklinke 10 ein. Bei Reversierbändern greifen zwei Sperrklinken 10 in jeweils entgegengesetzter Drehrichtung in das Zahnrad 9 ein, um die Lagerachse 3 in ihre durch Verdrehen vorgespannten Lage in beide Bandlaufrichtungen zu arretieren.

**Patentansprüche**

1. Abstreifvorrichtung zum Reinigen von Förderbändern, insbesondere Reversierbändern, mit einer unterhalb des betreffenden Förderbandes angeordneten Lagerachse für darauf befestigte Torsions-Federarme mit endseitigen Schabeblättern, welche in schleppender Anstellung gegen das rücklaufende Untertrum angedrückt sind, dadurch gekennzeichnet, daß die Schabeblätter (5) unter Zwischenschaltung von Torsions-Federgelenken (7) mit zur Bandlaufrichtung querliegender Torsionsachse (8) an den Enden der Torsions-Federarme (4) gelagert sind und dadurch bei reversierendem Förderband (1) aus ihrer schleppenden Vorlauf-Anstellung in umgekehrter Richtung in eine schleppende Rücklauf-Anstellung überkippen.

2. Abstreifvorrichtung nach Anspruch 1, dadurch gekennzeichnet, daß der Torsionswinkel der Torsions-Federgelenke (7) ca. 60° beträgt und davon der Torsionswinkelbereich für die Vorlauf-Anstellung bei 5° bis 10°, für die Rücklauf-Anstellung bei 50° bis 55° und bei neutraler Positionierung bei 20° bis 25° liegt.

3. Abstreifvorrichtung nach Anspruch 1 oder 2, dadurch gekennzeichnet, daß der Torsionswinkel in beide Kipprichtungen durch mechanische Anschläge begrenzt ist.

4. Abstreifvorrichtung nach einem der Ansprüche 1 bis 3, dadurch gekennzeichnet, daß die Torsions-Federgelenke (7) als Gummi- oder Stahlfederelemente ausgebildet sind.

5. Abstreifvorrichtung nach einem der Ansprüche 1 bis 4, dadurch gekennzeichnet, daß die Torsions-Federgelenke (7) von einer Manschette aus Gummi oder biegeelastischem Kunststoff umgeben sind.

6. Abstreifvorrichtung nach einem der Ansprüche 1 bis 5, dadurch gekennzeichnet, daß auf zumindest einem Ende der beiden Enden der Lagerachse (3) für die Torsions-Federarme (4) ein Zahnrad (9) befestigt ist und in das Zahnrad (9) zumindest eine feder- oder gewichtsbelastete Sperrklinke (10) eingreift.

7. Abstreifvorrichtung nach einem der Ansprüche 1 bis 6, dadurch gekennzeichnet, daß zwei Sperrklinken (10) in jeweils entgegengesetzter Drehrichtung in das Zahnrad (9) eingreifen.

## Claims

1. A wiping-off mechanism for the cleaning of conveyor belts, particularly reversible belts, with an axle in bearings located below the conveyor belt concerned to which axle are attached torsion spring arms with scraper blades at their ends, which are pressed in a dragging position against the return belt running in the backwards direction, characterized in that the scraper blades (5) are mounted, with interposition of torsion spring-couplings (7) having a torsional axis (8) transverse to the running direction of the belt, to the ends of the torsion spring arms (4) and thereby when the conveyor belt (1) is reversed in direction tip over from their dragging forward-running position into a dragging reverse-running position.

2. A wiping-off mechanism according to Claim 1, characterized in that the torsion angle of the torsion spring-couplings (7) amounts to about 60°, and of this the torsion angle range for the forward-running position is about 5° to 10°, for the reverse-running position 50° to 55° and for a neutral position 20° to 25°.

3. A wiping-off mechanism according to Claim 1 or 2, characterized in that the torsion angle in both directions of tipping is limited by mechanical buffers.

4. A wiping-off mechanism according to one of Claims 1 to 3, characterized in that the torsion spring-couplings (7) are formed as rubber- or steel-spring units.

5. A wiping-off mechanism according to one of Claims 1 to 4, characterised in that the torsion spring-couplings (7) are surrounded by a sleeve of rubber or elastically-flexible plastics.

6. A wiping-off mechanism according to one of Claims 1 to 5, characterized in that a gear-wheel (9) is fastened to at least one of the two ends of the axle (3) for the torsion spring arms (4) and at least one spring- or gravity-loaded locking pawl (10) engages into the gear-wheel (9).

7. A wiping-off mechanism according to one of Claims 1 to 6, characterized in that two locking pawls (10) engage into the gear wheel (9), each in an opposite direction of rotation to the other.

## Revendications

1. Dispositif de raclage pour nettoyer des bandes transporteuses, en particulier des bandes réversibles, avec un axe de palier disposé en dessous de la bande transporteuse considérée et portant des bras à ressort de torsion à l'extrémité desquels sont fixés des racleurs qui sont appliqués, en position traînante, contre le brin inférieur de la bande transporteuse en mouvement rétrograde, caractérisé par le fait que les racleurs (5) sont montés, avec interposition de joints à ressort de torsion (7) avec axe de torsion (8) placé transversalement par rapport au sens de mouvement de la bande, aux extrémités des bras à ressort de torsion (4) et que, lors de l'inversion du sens de mouvement de la bande transporteuse (1), ils basculent ainsi de leur position traînante en marche avant dans une position traînante en marche arrière.

2. Dispositif de raclage selon la revendication 1, caractérisé par le fait que l'angle de torsion des joints à ressort de torsion (7) est d'environ 60° et que la plage de torsion est de 5° à 10° pour le réglage en marche avant, de 50° à 55° pour le réglage en marche arrière et de 20° à 25° pour le positionnement neutre.

3. Dispositif de raclage selon l'une des revendications 1 ou 2, caractérisé par le fait que, dans les deux directions de basculement, l'angle de torsion est limité par des butées mécaniques.

4. Dispositif de raclage selon l'une quelconque des revendications 1 à 3, caractérisé par le fait que les joints à ressort de torsion (7) sont réalisés sous la forme d'éléments en caoutchouc ou en ressort d'acier.

5. Dispositif de raclage selon l'une quelconque des revendications 1 à 4, caractérisé par le fait que les joints à ressort de torsion (7) sont entourés par une manchette en caoutchouc ou en matière plastique élastique.

6. Dispositif de raclage selon l'une quelconque des revendications 1 à 5, caractérisé par le fait qu'au moins l'une des deux extrémités de l'axe de palier (3) pour les bras à ressort de torsion (4) porte une roue dentée (9) et qu'au moins un cliquet d'arrêt (10) commandé par ressort ou par contrepoids s'engage dans ladite roue dentée (9).

7. Dispositif de raclage selon l'une quelconque des revendications 1 à 6, caractérisé par le fait que deux cliquets d'arrêt (10) s'engagent respectivement en sens de rotation opposé dans la roue dentée (9).

Fig.1

Fig. 2

Fig. 3